# EUROPEAN PATENT APPLICATION

(11) **EP 1 336 920 A2**
(43) Date of publication of application: **20.08.2003**
(21) Application number: 02360357.4
(22) Date of filing: 17.12.2002
(51) Int. Cl.: G06F 9/445

(54) **Method for controlling the installation of program code on network elements**

(30) Priority: 14.02.2002 DE 10206001
(71) Applicant: ALCATEL, 75008 Paris (FR)
(72) Inventor: Daase, Detlef, 12205 Berlin (DE); Althainz, Bettina, 12157 Berlin (DE); Böhme, Jens, 10781 Berlin (DE); Müller, Irina, 12555 Berlin (DE)
(74) Representative: Brose, Gerhard

(57) **Abstract**

The invention relates to a method for controlling the installation of first program codes on network elements (TNE1 to TNE3, NE1 to NE12) of a telecommunications network by means of a network management system (SMC1) of the telecommunications network, and to a network management server for executing the method. Upon a first instruction of an operator of the telecommunications network, the network management system (SMC1) causes a first program code, intended for integration into second program codes already installed on network elements, to be transmitted from an utility server (SC1) to the network management server. The network management server transmits the first program code received from the utility server (SC1) to one or more network elements (TNE1 to TNE3, NE1 to NE12) of the telecommunications network and causes the first program code to be integrated into the second program code already installed on the respective network element. Upon a second instruction of the operator, the network management system (SMC1) activates this installation of the first program code for a limited area (TN) of the telecommunications network. Upon a third instruction of the operator, the network management system (SMC1) activates the installation of the first program code in the active network area (FN) of the telecommunications network.

## Description

The invention relates to a method for controlling the installation of first program codes on network elements of a telecommunications network by means of a network management system of the telecommunications network. The invention further relates to a network management server of a telecommunications network, with a control unit for controlling the installation of first program codes on network elements of the telecommunications network.

The invention arises from the process normally used in telecommunications network sector for the installation of so-called "patches".

"Patches" are small software modules which are installed on a multiplicity of network elements of a telecommunications network for the purpose of correcting errors or improve performance. These "patches" are loaded by an operator of the telecommunications network onto network elements of the telecommunications network. They can then subsequently be installed, by means of remote access by the operators, within the software of the network elements.

The disadvantage of this method consists in that it is very time-consuming and requires a high level of operator training.

The object of this invention is to improve the installation of program code on network elements of a telecommunications network.

This object is achieved by a method for controlling the installation of first program codes on network elements of a telecommunications network according to the teaching of Claim 1. This object is further achieved by a network management server of a telecommunications network according to the teaching of Claim 10.

The fundamental concept of the invention consists in dividing the software installation process into specific phases which are automatically executed by the network management system and between which there are decision points by means of which the operator can control the software installation process. Important decision points in this case are the acceptance of the transmission from a utility server of a program code which is to be installed, the activation of the installation of the program code for a limited area of the telecommunications network and the activation of the installation of the program code in the active network area of the telecommunications network.

The invention offers the advantage of enabling the integration of program codes into program codes already installed on network elements to be automated to a very large extent and of enabling control over decisive phases of the software installation to be nevertheless kept in the hands of the operator. As a consequence, firstly, the installation of program code in a multiplicity of network elements is rendered more flexible and accelerated. The availability of the telecommunications network is increased and installation errors are prevented to a very large extent. Furthermore, it is made possible to employ operators with a low level of training and to reduce the operator time required for the installation.

Advantageous developments of the invention are disclosed by the sub-claims.

It is advantageous to control the software installation process by means of an installation management system which is part of the network management system of the telecommunications network. The control of the entire process is thereby simplified and the user-friendliness is increased.

Further advantages are achieved if the installation of the program code is first activated in a test network area of the telecommunications network, then in a limited area of the active network area of the telecommunications network and then in the entire active network area of the telecommunications network. This further increases the integrity of the installation method.

The invention is exemplarily explained in the following with reference to several embodiment examples and with the aid of the accompanying drawings.
- Fig. 1: shows a block diagram of a system with several telecommunications networks and several utility servers.
- Fig. 2: shows a block diagram of a section of the system shown in Fig. 1.
- Fig. 3: shows a time diagram of the method according to the invention.
- Fig. 4: shows a functional representation of an utility server shown in Fig. 1 and of a network management server, according to the invention, shown in Fig. 1.

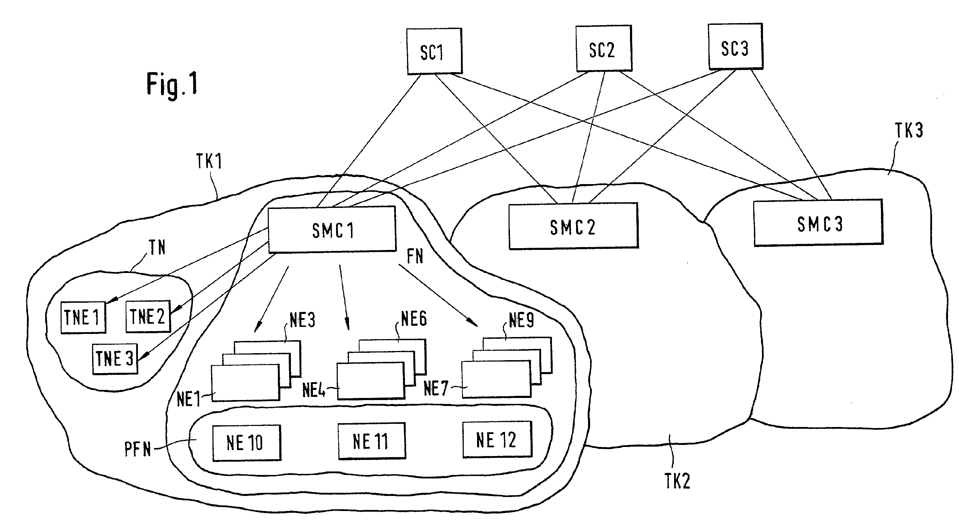

Figure 1 shows three utility servers SC1 to SC3 and three telecommunications networks TK1 to TK3.

Each of the telecommunications networks TK1 to TK3 is a telephone network, for example, operating according to the ISDN standard (ISDN = Integrated Services Digital Network). However, each of the telecommunications networks TK1 to TK3 can also be a data network using, for example, a TCP/IP protocol stack as a connection layer (TCP = Transmission Control Protocol, IP = Internet Protocol). It is further possible for each of the telecommunications networks TK1 to TK3 to be used for both speech, data and video communication. It is further possible for each of the telecommunications networks TK1 to TK3 to be formed by several sub-telecommunications-networks. For example, the telecommunications network TK1 can comprise a LAN network based on an Ethernet protocol (LAN = Local Area Network), several ATM networks (ATM = Asynchronous Transfer Mode), a PSTN network (PSTN = Public Switched Telephone Network), and several mobile access networks, for example, based on the GSM standard (GSM = Global System for Mobile Communication). It is of course also possible for the telecommunications networks TK1 to TK3 to be differently configured.

The telecommunications networks TK1 to TK3 are assigned to different network operators. The respective network operator controls and manages his telecommunications network by means of one or more "human" operators. The telecommunications network of such a network operator, thus, for example, the telecommunications network TK1, is logically divided into one or more areas. For example, the telecommunications network TK1 is divided into two network areas TN and FN. The network area TN is a test network area. This test network area comprises one or more network elements of the telecommunications network TK1. The network elements of the test network area are used for test purposes. It is possible in this case for no communication to be possible between the network elements of the network area TN and the network elements of the network area FN.

The network area FN is an active network area of the telecommunications network TK1. Active network area means that this network area of the telecommunications network TK1 comprises those network elements of the communications network TK1 which provide communications services and other services to users of the telecommunications network TK1.

The network area FN further comprises a network area PFN. The network area PFN comprises some of the network elements of the network area FN and thus constitutes a sub-area of the network area FN.

The network areas TN and PFN form limited areas of the telecommunications network TK1. Limited area for the purposes of the invention means that the area does not comprise the entire active network area of the telecommunications network TK1 and thus comprises only some of the network elements of the telecommunications network TK1.

Each of the telecommunications networks TK1 to TK3 has a network management system SMC1, SMC2 and SMC3 respectively. The network management systems SMC1 to SMC3 serve to manage the respective telecommunications network TK1, TK2 and TK3 respectively and thereby to manage also the network elements of the telecommunications networks TK1, TK2 and TK3 respectively. They communicate with the network elements of the respective telecommunications network and exchange status information and control information with the latter for'the purpose of performing management functions.

Of the network elements of the telecommunications networks TK1 to TK3, fifteen network elements NE1 to NE12 and TNE1 to TNE3 are shown as examples in Figure 1. The network elements NE1 to NE12 and TNE1 to TNE3 are, for example, switching centres, routers, gateways or billing servers of the telecommunications network TK1. Network elements for the purposes of the invention, however, are also other servers of a telecommunications network which provide functions which are specific to a telecommunications network. In this case, they can also provide network management or service management functions. Thus, utility servers which provide, for example, an SCP functionality (SCP = Service Control Point) within an IN architecture (IN = Intelligent Network) also constitute network elements for the purposes of the invention.

The network elements TNE1 to TNE3 represent normal network elements which, however, unlike the network elements of the network area FN, are used primarily for test purposes of the network operator. It is also possible for the network elements TNE1 to TNE3 to be used for other purposes in addition. Thus, it is also possible for the network elements TNE1 to TNE3 to assume functions of a network element of the network area FN in the event of failure of this network element. It is further possible for the network elements TNE1 to TNE3 to (temporarily) support the provision of services to users of the telecommunications network TK1, in addition to their role as test network elements.

The network elements NE1 to NE12 of the network area FN are assigned, for example, to three groups of network elements. Thus, the network elements NE1, NE2, NE3 and NE10 form one group, the network elements NE4, NE5, NE6 and NE11 form one group and the network elements NE7, NE8, NE9 and NE12 form one group.

The utility servers SC1 to SC3 serve to support the installation of program codes on network elements of the telecommunications networks TK1 to TK3.

The utility servers SC1 to SC3 are connected to the network management systems SMC1 to SMC3 via a communications medium. This communications medium is a data network. In this case, for example, it is a LAN based on an Ethernet protocol. Alternatively, this can also be a MAN (Metropolitan Area Network) or an ATM-based network which supports a TCP/IP protocol stack as a connection layer. It is also possible for the communications medium to be a signalling network of the telecommunications network, for example, to be the signalling network of the respective telecommunications network TK1, TK2 or TK3. It is also possible for the communications medium to be an interprocess communications service of an operating system or to be a software bus which is based, for example, on a CORBA architecture (CORBA = Common Object Request Broker Architecture).

The utility servers SC1, SC2 and SC3 are advantageously assigned to different service providers or technology suppliers. They respectively support the installation of program codes on a special group of network elements of the telecommunications networks TK1 to TK3. This group of network elements is formed, for example, by the network elements which are produced and distributed by one and the same technology supplier.

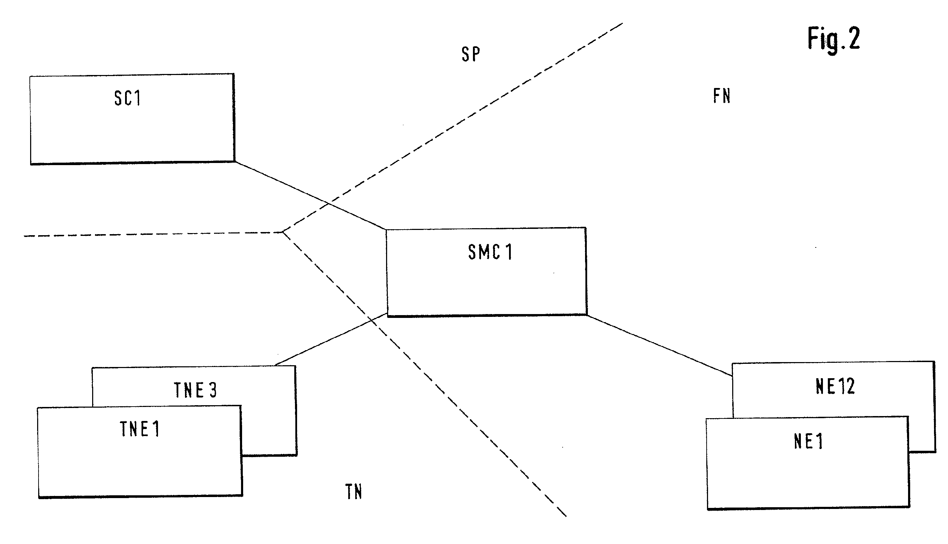

Fig. 2 shows the utility server SC1, the network management system SMC1, the network elements TNE1 to TNE3 and the network elements NE1 to NE12. The utility server SC1 is located in the area of a service provider SP. The area of the network operator of the telecommunications network TK1 is divided into the network areas FN and TN. The area of the service provider SP and the network areas TN and FN are in each case separated from one another by a firewall. Thus, the utility server SC1 is separated from the network management system SMC1 by a firewall of the network operator of the telecommunications network TK1. The network management system SMC1 is likewise separated from the network elements TNE1 to TNE3 of the network area TN by the firewall of the network operator of the telecommunications network TK1. The utility server SC1 communicates with the network management system SCM1 via a - relative to the telecommunications network TK1 - external data network. Thus, for example, the utility server SC1 transmits program codes by means of an FTP service (FTP = File Transfer Protocol), via an ISDN communication connection. The network management system SCM1 communicates with the network elements TNE1 to TNE3 and NE1 to NE12 via a - relative to the telecommunications network TK1 - internal communications network. For example, the network management system SMC1 transmits program codes by means of an FTP service, via a TCP/IP connection, to the network elements TNE1 to TNE3 and NE1 to NE12.

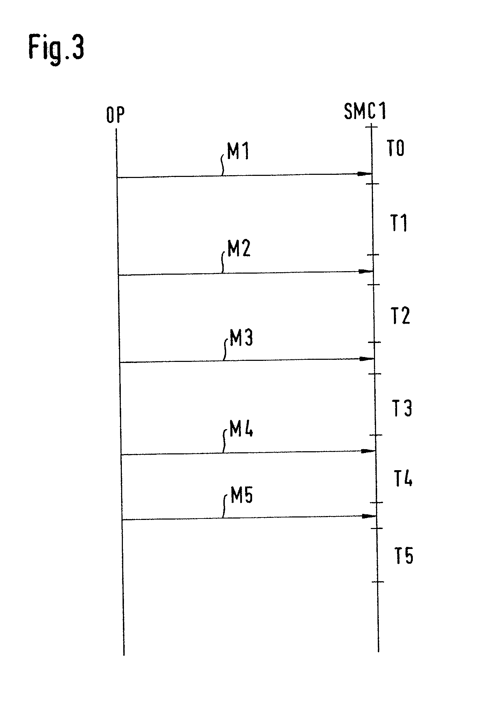

Fig. 3 shows an operator OP of the telecommunications network TK1 and the network management system SMC1. Fig. 3 further shows five instructions M1 to M5 and six phases T0 to T5.

In the phase T0, there is stored on the utility server SC1 a set of program codes which are intended to be integrated into program codes installed on network elements of the telecommunications networks TK1 to TK3. This set of program codes is thus centrally stored in the utility server SC1 for the network management systems SMC1 to SMC3. In similar manner, the utility servers SC2 and SC3 respectively store a set of program codes which are intended to be integrated into program codes installed on network elements of the telecommunications networks TK1 to TK3. The sets of program codes which are stored in the utility servers SC1 to SC3 are advantageously assigned to different groups of network elements. The sets of program codes stored on the utility servers SC1 to SC3 are offered by these utility servers to operators of the telecommunications networks TK1 to TK3 via their respective network management system SMC1 to SMC3.

Upon the instruction M1 of the operator OP of the telecommunications network TK1, the network management system SMC1, in the phase T1, causes a program code, intended for integration into program codes already installed on network elements, to be transmitted from the utility server SC1 to a network management server of the network management system SMC1.

Upon the instruction M2 of the operator OP, the network management server, in the phase T2, transmits the program code received from the utility server SC1 to one or more network elements of the telecommunications network TK1 and causes the program code to be integrated into the program code already installed on the respective network element. In this manner, the program code is automatically installed on the respective network element.

It is also possible in this case for the transmission and integration described above to be automatically effected by the network management system SMC1 upon the receipt of the program code from the utility server SC1. Thus, in this case, the instruction M2 is omitted and the phases T1 and T2 are combined.

It is possible in this case for the program code to be installed, in the phase T2, on all network elements of the telecommunications network TK2 on which an activation of the installation is intended. However, it is also possible for the program code, in the phase T2, to be transmitted only to those network elements and integrated into the program code of those network elements, which are assigned to a limited area of the telecommunications network TK1.
In this case, the transmission of the program code to the remaining network elements and its installation on them is then effected at a later time.

Upon the instruction M3 of the operator OP, the network management system SMC1, in the phase T3, activates the installation of the program code for a limited area of the telecommunications network TK1. Activated, in this connection, means that the changes to the software of the respective network element which are caused by the integration of the program code into the program codes already present on the respective network element are rendered effective. Following the activation, the respective network element operates according to the thus modified software.

The limited area of the telecommunications network is preferably the network area TN. Thus, upon the instruction M3, the installation of the program code is activated, for example, on the network element TNE1 and the network element TNE1 then immediately operates according to the software modified by the integration of the program code.

It is also possible, however, for the limited area to be the network area PFN.

Upon the request M4 of the operator OP, the network management system SMC1, in the phase T4, activates the installation of the program code in a further limited area of the telecommunications network TK1. This further area of the telecommunications network TK1 is, for example, the network area PFN.

This is advantageous if the limited network area to which the instruction M3 relates is the test network area of the telecommunications network TK1 and the limited area to which the instruction M4 relates is a limited area of the active network area of the telecommunications network TK1. Thus, it is possible for the operator OP progressively to test the effect of the activation of the installation and thereby to improve the integrity of the entire system.

Upon the instruction M5 of the operator OP, the network management system SMC1, in the phase T5, activates the installation of the program code in the active network area FN of the telecommunications network TK1.

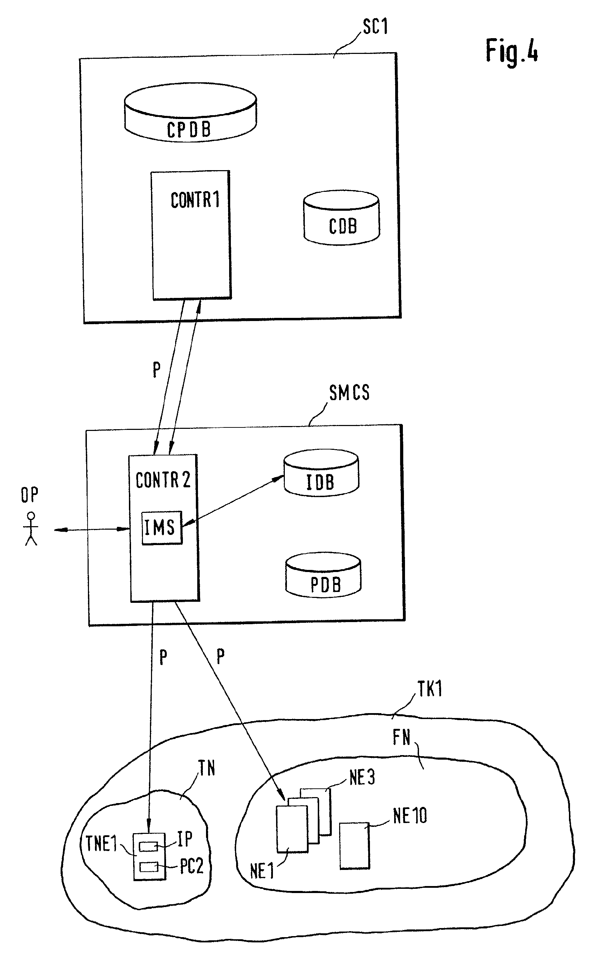

The detailed functioning of the method according to the invention and the detailed functioning of a network management server according to the invention are now described with reference to Figure 4.

Fig. 4 shows the utility server SC1, the network management server SMCS and the network elements TNE1, NE1, NE2, NE3 and NE10.

The utility server SC1 is formed by one or more interconnected computers and by the software supported on these computers. The functions, described below, of the utility server SC1 are provided in the execution of the software of the utility server SC1 on the hardware of the utility server SC1. In respect of function, the utility server SC1 comprises two memory units CPDB and CDB and a control unit CONTR1. The memory units CPDB and CDB are respectively formed by databanks or data structures which are based on the memory system of the utility server SC1. The control unit CONTR1 is formed by the system processor or the system processors of the utility server SC1 and the software of the utility server SC1 running on it/them.

Stored in the memory unit CPDB is a multiplicity of program codes which are intended to be integrated into program codes installed on network elements. In this case, yet further data can be assigned to each program code in the memory unit CPDB. Such data can be, for example, description data. Description data can comprise, for example, data relating to the function or manner of functioning of the respective program code, data relating to the type of the network elements on which the respective program code can be installed, data relating to the date of generation and the generation organization of the program code, or data relating to an authorization of the program code. Furthermore, an installation code and/or a test code can be assigned to a program code in the memory unit CPDB.

The test code is designed in such a way that it can be used by a network element to check the program code present on the network element, prior to the integration of the program code on the network element, in respect of whether it is compatible with the program code. In this check, the test code can check the program code present on the respective network element in respect of whether particular programs or program versions are present and whether this configuration fulfils the requirements of the program code. It is furthermore possible for the test code to contain one or more executable test programs whose execution on the respective network element produces a result by means of which it is possible to check whether necessary environmental conditions for the program code are or are not present. It is also possible in this case for the test code to contain information on the interpretation of the result of such test program.

The installation code is designed in such a way that it supports a network element in integrating the program code into the program code already present on the respective network element. The installation code contains specific instructions relating to how the program code is to be integrated into the program code already present on the respective network element. Such instructions can relate both to the integration of the program code into the program code present on the network element and to a necessary adaptation of the program code or of the program code present on the network element.

Program code, in this sense, is on the one hand an executable code, for example, object code or libraries, or code to be interpreted, for example, Java applets. On the other hand, configuration files, data describing information to be represented or other data which forms input data for computer programs and influences their functioning, are likewise program code in this sense.

The memory unit CDB contains data relating to network elements which are managed by the network management systems SMC1 to SMC3. Such data, advantageously, is description data which describes the type and the linking of the network elements of the telecommunications network TK1. It is furthermore advantageous for this data to have a description list which describes the installation status of the network elements of the respective telecommunications network. This list can comprise data which describes which of the program codes stored in the memory unit CDPB are already installed on which of the network elements of the respective telecommunications network TK1. Furthermore, the distribution list can contain information which describes system characteristics of the network elements of the telecommunications network TK1. It is also possible to omit the memory unit CDB.

The control unit CONTR1 enables the network management systems SMC1 to SMC3 to access data of the memory unit CDPB. By means of corresponding control commands, it is possible for the network management systems SMC1 to SMC3, within the limits of such an access, to extract data from the memory unit CPDB and to cause the control unit CONTR1 to transmit program codes stored in the memory unit CPDB to the respective network management system.

In addition to these functions, the control unit CONTR1 can provide yet further functions. Thus, for example, it is possible for the control unit CONTR1 to calculate for network management systems, by means of the memory unit CDB, a preselection of program codes from the program codes stored in the memory unit CPDB. It is furthermore possible for the control unit CONTR1 to limit access to the program codes stored in the memory unit CPDB and to permit access to data of the memory unit CPDB only following the execution of an authorization procedure.

The network management system SCM1 comprises one or more network management servers. The network management system SMC1 can further comprise one or more network management clients which serve to communicate with the operators of the network operator of the telecommunications network TK1. Of the network management servers of the network management system SMC1, a network management server SMCS is shown as an example in Fig. 4.

The network management server SMCS is formed by one or more interconnected computers, by the software platform supported by these computers and by the application programs supported on this software platform. The functions, described below, of the network management server SMCS are provided in the execution of these application programs on the system platform of the network management server SMCS formed by the hardware and software platforms.

In addition to the functions described below, it is also possible and appropriate for the network management server SMCS to provide a multiplicity of further functions. These functions are advantageously network management functions. Furthermore, it is also possible for the hardware components of the network management server SMCS to be spatially distributed and for the network management server SMCS thus to be a "virtual" server.

In respect of function, the network management server SMCS has two memory units IDP and PDB and a control unit CONTR2. The memory units IDP and PDB are formed by databanks or data structures which are based on the memory system of the network management server SMCS. The control unit CONTR2 is formed by the system processor or the system processors of the network management server SMCS and the application programs of the network management server SMCS whose execution by the system processors of the network management server SMCS provides the functions, described below, of the control unit CONTR2.

The memory unit CDB serves to store one or more program codes intended to be integrated into program codes installed on network elements of the telecommunications network TK1. One or more such program codes are normally stored in the memory unit PDB. In addition to such codes, it is furthermore possible for yet further, assigned data to be stored in the memory unit PDB. Such data is, for example, assigned test codes, assigned installation codes and/or assigned description data. The memory unit PDB can thus contain some of the data that is contained in the memory unit CPDB of the utility server SC1. To this extent, reference is made to the description relating to the memory unit CPDB. It is advantageous in this case for the memory unit PDB, unlike the memory unit CPDB, to contain installation codes and test codes which have been adapted to the specific conditions of the telecommunications network TK1 or the specific conditions of network elements of the telecommunications network TK1. This adaptation can be effected by the control unit CONTR1 of the utility server SC1. It is also possible, however, for this adaptation to be effected, in analogous manner, by the control unit CONTR2 of the network management server SMCS.

The memory unit PDB contains data relating to a distribution matrix. This distribution matrix describes the status of the program codes stored in the memory unit PDB and on which of the network elements of the telecommunications network TK1 these program codes are already installed or activated. Furthermore, this distribution matrix can also contain further details relating to the program codes already installed on the network elements of the telecommunications network TK1. Furthermore, the memory unit IDB can comprise data which describes system characteristics of the network elements of the telecommunications network TK1.

The control unit CONTR2 provides functions which serve to control the installation of program codes on network elements of the telecommunications network TK1.

The control unit CONTR2 provides, on the one hand, a user interface, advantageously a graphical user interface, by means of which the control unit CONTR2 can communicate with an operator OP of the network operator of the telecommunications network TK1. It is also possible, however, for the user interface to be provided by a network management client of the network management system SMC1.

The control unit CONTR2 contacts an utility server on which there is stored a set of program codes intended to be integrated into program codes installed on network elements. Furthermore, it may possibly execute an authentication procedure necessary for accessing program codes of this set of program codes. It is possible in this case for such an utility server to be contacted upon an instruction of the operator OP. It is also possible, however, for the contacting to be initiated routinely or automatically on the basis of the occurrence of certain trigger conditions, by the control unit CONTR2.

It is possible for data relating to assigned utility servers also to be stored in the memory unit IDB, in addition to data relating to the network elements managed by the network management system SMCS. In this case, the control unit CONTR2 selects, from the utility servers stored in the memory unit IDB, one or more utility servers and contacts the latter. This selection can be effected in this case by means of the data, stored in the memory unit IDB, relating to these utility servers and relating to the network elements assigned to these utility servers. It is also possible for this selection to be effected on the basis of trigger conditions or on the basis of instructions of the operator OP.

The control unit CONTR2 contacts, for example, the utility server SC1. Following execution of an authentication procedure, the control unit CONTR1 permits access to a set of program codes and to the data, assigned to these program codes, which is stored in the memory unit CPDB of the utility server SC1.

The control unit CONTR2 can now cause information relating to the program codes to which the network management system SMC1 has been granted access by the control unit CONTR1 to be displayed to the operator OP. The control unit CONTR2 thus sends, for example, a control instruction to the control unit CONTR1 instructing the latter to transmit to the network management server SMCS description data relating to all or some of these program codes. Upon receipt of this description data, the control unit CONTR2 causes it to be displayed, in an appropriate form, to the operator OP.

Upon an instruction of the operator OP of the telecommunications network, the control unit CONTR2 causes a program code, intended for integration into program codes already installed on network elements, to be transmitted from an utility server to the network management server SMCS.

In this embodiment example, the control unit CONTR2 transmits a control command to the utility server SC1 which has already been contacted by it and which has already permitted the network management system SMC1 access to program codes intended for integration into program codes already installed on network elements. This control command instructs the utility server SC1 to transmit one or more program codes to the network management server SMCS.

The program codes or program code to be transmitted can be specified in the instruction of the operator OP. It is also possible, however, for these program codes to be selected independently by the control unit CONTR2. Such a selection can be calculated by the control unit CONTR2 by means of, for example, the correlation of data of the memory unit IDB and description data which the control unit CONTR2 requests from the control unit CONTR1 of the utility server SC1. It is furthermore possible for the program codes to be transmitted to be determined by the control unit CONTR1 of the utility server SC1 through calculation or to be already specified in the memory unit CPDB of the utility server SC1. In this case, upon the instruction of the operator OP, the control unit CONTR2 transmits a control command to the utility server SC1 instructing the latter to transmit the thus determined or calculated codes for the network management system SMC1 to the network management server SMCS.

It is furthermore possible for assigned installation codes and/or assigned tests codes to be transmitted to the network management server SMCS by the control unit CONTR1 upon the control command of the control unit CONTR2, in addition to the program code or program codes.

It is furthermore possible for one or more of the program codes stored in the memory unit CPDB to be marked by the control unit CONTR1, in respect of the control unit CONTR2, as program codes which can be installed for the network management system SMC1. The control unit CONTR1 can thus determine or calculate a preselection, for example, as described above, from the program codes stored in the memory unit CPDB. Following contacting and authentication, the control unit CONTR1 transmits information relating to these marked program codes to the network management server SMCS. For example, in the transmitted description data, the marked program codes can be marked by a special parameter. It is also possible for only description data of marked program codes to be transmitted to the network management server SMCS.

The control unit CONTR2 then causes the thus marked program codes to the displayed to the operator OP as program codes which can be installed in the telecommunications network TK1. The operator OP then selects one or more of the program codes which have been indicated to him as installable program codes, by means of an instruction to the control unit CONTR2. The selected program code or program codes are then requested by the control unit CONTR2 by means of a control command.

The program codes transmitted by the utility server SC1 are stored by the control unit CONTR2 in the memory unit PDB. Furthermore, the program codes received from the utility server SC1 are transmitted by the control unit CONTR2 to one or more network elements of the telecommunications network TK1. Furthermore, the control unit CONTR2 causes the transmitted program code to be integrated into the program code already installed on the respective network element.

Thus, for example, the control unit CONTR2 transmits a program code P, which has been transmitted to it by the utility server SC1, to the network elements TNE1, NE1, NE2, NE3 and NE10. Together with the program code P, it transmits a control instruction to the network elements TNE1, NE1, NE2, NE3 and NE10. The control instruction causes an installation program IP, present on the network elements TNE1, NE1, NE2, NE3 and NE10, to integrate the received program code P into the program code already installed on the respective network element. Thus, for example, it causes the installation program IP of the network element TNE1 to integrate the program code P into a program code PC2 already present on the network element TNE1.

It is also possible for the control unit CONTR2 also to transmit an installation code and a test code to network elements of the telecommunications network TK1, with the program code P. By means of the test code, the installation program IP checks, prior to an installation of the program code P, whether the program code P to be installed is compatible with the program code, already installed on the respective network element, into which the program code is to be integrated. Only if the result of this test is positive will the installation program IP then perform the integration. This integration is effected in this case according to the instructions of the assigned installation code. It is also possible, however, for the installation code and the test code to be already present on the respective network element and therefore not to be transmitted by the network management server SMCS. Furthermore, it is possible for an installation or test code, stored in the memory unit PDB and assigned to a program code, to be adapted by the control unit CONTR2 to the respectively specific network element to which the program code is to be transmitted for installation.

It is advantageous for the network management system SMC1 to have an installation management system. This system serves to control and manage the installation of program codes in network elements of the telecommunications network TK1. The function of such an installation management system can be provided by, for example, the control unit CONTR2. The control unit CONTR2 can thus have a function unit IMS which effects the function of an installation management system.

The function unit IMS of the control unit CONTR2 accesses the distribution matrix stored in the memory unit IDB. It updates the data of the distribution matrix and permits the operator OP access to data of the distribution matrix. Furthermore, as described in the following, it controls the installation of program code on network elements of the telecommunications network TK1 by means of data of the distribution matrix.

The program codes transmitted by the utility server SC1 upon an instruction of the operator OP are stored in the memory unit PDB and received by the function unit IMS in the installation management system of the network management system SMC1 as installable program code. Description data of the transmitted program codes is received by the function unit IMS into the distribution matrix of the memory unit IDB. The status "installable program code" is then assigned to this program code in the memory unit. In the memory unit IDB, the information is stored in such a way that the transmitted program code has the status "installable program code" and this program code is not yet installed in any network element of the telecommunications network TK1.

Upon an instruction of the operator OP, the function unit IMS selects, from the program codes managed by the installation management system, a program code marked as installable program code. It then transmits this program code, as described above, to one or more network elements of the telecommunications network TK1 and marks this program code in the distribution matrix as installed program code. In this case, this marking can be effected by the function unit IMS immediately following transmission of the program code to the network elements of the telecommunications network TK1. However, it is also possible in this case for this marking to be effected only when a confirmation message is received from these network elements confirming that the transmitted program code is integrated into the program code already present on the respective network element and is thus installed on the respective network element.

For the marking of the program code in the installation management system, the function unit IMS changes the status of the program code in the distribution matrix of the memory unit IDB from "installable program code" into "program code installed". Furthermore, in the distribution matrix it links the program code to those network elements on which the program code has been installed.

It is also possible for the installation of a program code, transmitted by the utility server SC1, on network elements of the telecommunications network TK1 not to be effected upon an instruction of the operator OP but automatically by the control unit CONTR2, upon the receipt of such a program code. In this case, the transmitted program code is immediately marked in the installation management system of the network management system SMC1 as installed program code, in a manner similar to that described above.

Upon an instruction of the operator OP, the control unit CONTR2 activates the installation of a program code for a limited area of the telecommunications network TK1. This limited area of the telecommunications network TK1 is, for example, the network area TN.

For this purpose, upon the instruction, described above, of the operator OP, the control unit CONTR2 sends a control command to all those network elements of the network area TN on which the program code has been installed. This control command instructs these network elements to activate the installation of the program code. As already described above, the network element receiving this instruction thereupon operates according to the software modified by the installation of the program code.

The program code P has been installed on the network element TNE1 of the network area TN. The control unit CONTR2 thus sends such a control command to the network element TNE1 upon the instruction of the network operator OP.

It is possible in this case for the control unit CONTR2 to select, upon the instruction of the operator OP, a program code, marked as installed program code in the installation management system, and to activate the installation of the selected program code for the limited part of the telecommunications network TK1. The function unit IMS thus offers the operator OP such a selection possibility and limits the activation possibility of the operator to those program codes which have the status "program code installed" in the memory unit IDB.

The functioning of the network element TNE1, now operating according to a modified software, is monitored by the operator OP by means of the network management system SMC1. If the functioning of the network element TNE1 fulfils the requirements of the operator OP, the latter can mark this program code as released program code, by means of a corresponding instruction to the network management system SMC1. Upon this instruction of the operator OP, the program code installed on the network element TNE1 by means of the method described above is marked as released in the installation management system of the network management system SMC1. Upon this instruction, the function unit IMS changes the status of this program code entered in the distribution matrix from "program code installed" to "program code released".

It is also possible in this case for different, graduated statuses to be assignable to program codes. For example, upon an instruction of the operator OP, the program code can be marked as "released for a limited network area" or as "released for the active network area".

Upon an instruction of the operator OP, the control unit CONTR2 activates the installation of the program code in the active network area of the telecommunications network TK1. Upon this instruction of the operator OP, the control unit CONTR2 sends a control command to those network elements of the active network area of the telecommunications network TK1 on which the program code transmitted by the utility server SC1 has been installed. This control command instructs these network elements to activate the installation of the program code on these network elements, as described above. This control command is thus sent by the control unit CONTR2 to the network elements NE1, NE2, NE3 and NE10 of the network area FN on which the program code P has been installed.

In this case, this activation instruction of the operator OP can be the release instruction described above. Thus, if the control unit CONTR2 receives from the operator OP an instruction to mark the program code as released program code in the installation management system, the control unit CONTR2 automatically activates the installation of the program code in the active network area of the telecommunications network TK1.

It is also possible for the function unit IMS to limit the activation possibility of program codes in the active network area of the telecommunications network TK1. The function unit IMS enables the operator OP to select, by means of an instruction, a program code marked as released in the installation management system and to activate the installation of this released program code in the active network area of the telecommunications network TK1.

The function unit IMS then marks as "activated program codes" in the distribution matrix of the memory unit IDB those program codes whose installation in the active network area of the telecommunications network TK1 has been activated. Furthermore, it provides for a linkage to be entered in the distribution matrix to those network elements of the active network area of the telecommunications network TK1 on which the installation of the program code has been activated.

It is advantageous for the installation management system provided by the function unit IMS to display the following information to the operator OP: name and quantity of the program codes available in the memory unit PDB, name and short description of the program codes which are installed on network elements of the telecommunications network TK1, necessary information on how an installed program code is to be activated, name of all activated program codes in the sequence of their activation, and time at which a program code was activated.

The operator OP therefore has available the following decision points by means of which he can control the installation of program codes on network elements of the telecommunications network TK1: a program code provided by the utility servers SC1 to SC3 is accepted only upon an instruction of the operator OP. A program code is only released for the active network area of the telecommunications network TK1 upon a further instruction of the operator OP. The installation of a program code for a limited area of the telecommunications network TK1 is activated only upon an instruction of the operator OP. The program code is only activated for the active area of the telecommunications network upon a further instruction of the operator OP.

## Claims

1. Method for controlling the installation of first program codes (P) on network elements (NE1 to NE12, TNE1 to TNE3) of a telecommunications network (TK1 to TK3) by means of a network management system (SMC1 to SMC3) of the telecommunications network,
**characterized in that**
upon a first instruction (M1) of an operator (OP) of the telecommunications network, the network management system (SMC1) causes a first program code (P), intended for integration into second program codes (PC2) already installed on network elements, to be transmitted from an utility server (SC1) to a network management server (SMCS) of the network management system (SMC1),
**in that** the network management server (SMCS) transmits the first program code (P) received from the utility server (SC1) to one or more network elements (NE1 to NE12, TNE1 to TNE3) of the telecommunications network (TK1) and causes the first program code to be integrated into the second program code (PC2) already installed on the respective network element (NE1 to NE12, TNE1 to TNE3) and thus installs the first program code (P) on the respective network element (NE1 to NE12, TNE1 to TNE3),
**in that**, upon a second instruction (M3) of the operator (OP), the network management system (SMC1) activates the installation of the first program code for a limited area (TN, PFN) of the telecommunications network (TK1), and
**in that**, upon a third instruction (M5) of the operator (OP), the network management system (SMC1) activates the installation of the first program code in the active network area (FN) of the telecommunications network (TK1).

2. Method according to Claim 1, **characterized in that** a multiplicity (SP) of first program codes (P) is stored in the utility server (SC1) and information (DSP) relating to first program codes stored in the utility server (SC1) is displayed to the operator (OP) by the network management system (SMC1).

3. Method according to Claim 1, **characterized in that**, upon the first instruction (M1), a first program code (P) marked by the utility server as installable program code is selected by the network management server (SMCS).

4. Method according to Claim 1, **characterized in that** the first program code transmitted upon the first instruction (M1) is stored in a memory unit (PDB) of the network management server (SMCS) and is received as installable program code in an installation management system (IMS) of the network management system (SMC1).

5. Method according to Claim 1, **characterized in that**, upon a fourth instruction (M2) of the network operator (OP), a program code marked as installable program code in an installation management system (IMS) is selected by the network management server (SMCS), transmitted to one or more network elements (NE1 to NE12, TNE1 to TNE3) and marked as installed in the installation management system (IMS).

6. Method according to Claim 1, **characterized in that** a first program code, transmitted to the one or more network elements (NE1 to NE12, TNE1 to TNE3) and integrated into the respective second program code, is marked as installed in an installation management system (IMS) of the network management system (SMC1) by the network management server (SMCS).

7. Method according to Claim 1, **characterized in that**, upon the second instruction (M3), a program code marked as installed in an installation management system (IMS) of the network management system (SMC1) is selected by the network management server (SMCS) and the installation of the selected program code is activated for the limited part (TN) of the telecommunications network (TK1).

8. Method according to Claim 1, **characterized in that**, upon a fifth instruction (M4) of the operator (OP), a first program code is marked as released in an installation management system (IMS) of the network management system (SMC1) and **in that**, upon the third instruction (M5), a program code marked as released in the installation management system (IMS) is selected by the network management server (SMCS) and the installation is activated in the active network area of the telecommunications network.

9. Method according to Claim 1, **characterized in that**, upon the third instruction (M5), a program code is marked as released in an installation management system (IMS) of the network management system (SMC1) by the network management server and the installation is activated in the active network area of the telecommunications network.

10. Network management server (SMCS) of a telecommunications network (TK1), with a control unit (CONTR2) for controlling the installation of first program codes (P) on network elements (NE1 to NE12, TNE1 to TNE3) of the telecommunications network (TK1 to TK3),
**characterized in that** the control unit (CONTR2) is designed in such a way that, upon a first instruction (M1) of an operator (OP) of the telecommunications network, it causes a first program code (P), intended for integration into second program codes (PC2) already installed on network elements, to be transmitted from an utility server (SC1) to the network management server (SMCS),
**in that** the control unit (CONTR2) is further designed in such a way that it transmits the first program code (P) received from the utility server (SC1) to one or more network elements (NE1 to NE12, TNE1 to TNE3) of the telecommunications network (TK1) and causes the first program code to be integrated into the second program code (PC2) already installed on the respective network element (NE1 to NE12, TNE1 to TNE3) and thus installs the first program code (P) on the respective network element (NE1 to NE12, TNE1 to TNE3),
**in that** the control unit (CONTR2) is further designed in such a way that, upon a second instruction (M3) of the operator (OP), it activates the installation of the first program code for a limited area (TN, PFN) of the telecommunications network (TK1), and
**in that** the control unit (CONTR2) is further designed in such a way that, upon a third instruction (M5) of the operator (OP), it activates the installation of the first program code in the active network area (FN) of the telecommunications network (TK1).

11. Network management server (SMCS) according to Claim 10,
**characterized in that** the control unit (CONTR2) is designed in such a way that it provides the function of an installation management system (IMS).
